# EUROPEAN PATENT SPECIFICATION

(11) **EP 0 527 919 B1**
(45) Date of publication and mention of the grant of the patent: **28.12.1994**
(21) Application number: 91909958.0
(22) Date of filing: 10.05.1991
(51) Int. Cl.: B65G 57/00, B65G 59/00, B65G 60/00

(54) **AN APPARATUS FOR STACKING/DESTACKING BOXES**
ANLAGE ZUM STAPELN UND ABSTAPELN VON BEHÄLTERN
APPAREIL A EMPILER ET A DESEMPILER DES BOITES

(30) Priority: 10.05.1990 DK 1166/90
(43) Date of publication of application: 24.02.1993
(73) Proprietor: ITS-COMSTORE A/S, DK-4733 Tappernöje (DK)
(72) Inventor: BRUSVANG, Robert, DK-4056 Kr. Saby (DK)
(74) Representative: Jeppesen, Finn Heiden
(86) International application number: DK9100126
(87) International publication number: WO9117102

(56) References cited:
- DE-B- 1 162 283
- DE-B- 1 282 555
- DE-B- 2 143 807
- FR-A- 1 508 869
- GB-A- 992 487

## Description

The invention concerns an apparatus of the type defined in the introductory portion of claim 1.

In the industry, systems for stacking boxes or for destacking boxes for further transport are known.

Thus, DE-A-1 282 555 discloses an apparatus of the type stated in the opening paragraph for stacking and destacking boxes. This apparatus has carrier means with sensor means in the form of a surface which is kept engaged with a stack of boxes by a spring and kept disengaged from a box if another box is stacked on top of it. Therefore, the said surface must slide against the stack of boxes, which results in wear and damage as well as frictional loads.

FR-A-1 508 869 discloses another apparatus of the present type which, however, is only capable of stacking plate-shaped objects, which are fed one by one from a conveyor belt, said objects being gripped and lifted in a horizontal position and transported and stacked on a trolley in said horizontal position. Since removal of the objects from the trolley is not involved, i.e. no destacking of the objects on the trolley, sensor means capable of registering the stack on the trolley are not needed, and thus the above-mentioned problem does not exist.

The object of the invention is to provide an apparatus of the present type which can be used for stacking as well as destacking, and which is not vitiated by the drawback during destacking which is known from the apparatus described in DE-A-1 282 555.

This is achieved in that the apparatus is constructed as stated in the characterizing portion of claim 1. During destacking the support means move in an upward direction past the stack without touching it, because they are kept clear of the stack by their spring. The activation means move from a position above the uppermost box in the stack downwardly and stop, controlled by the sensors, opposite the uppermost box, so that they activate the next support means which are caused to engage the uppermost box against the force from their springs, said uppermost box being thereby lifted from the stack. Then the activation means move downwardly and stop again opposite the now uppermost box, which is gripped by the next support means. This process continues until all boxes in the stack have been moved.

The invention will be explained more fully below with reference to the drawing, in which
fig. 1 is a side-view of the apparatus of the invention mounted between two conveyor belts,
fig. 2 shows the same as fig. 1 in top view,
fig. 3 is an enlarged view of the apparatus of the invention, seen from the end shown by an arrow A in fig. 2,
fig. 4 shows the right side of the apparatus in fig. 3, seen from within,
fig. 5 shows the top left corner of the side frame for the side shown in fig. 4, with guide groove and guide means engaged with the guide groove, and
fig. 6 shows part of one of the two toothed belts contained in the apparatus and having an eye for attachment of a carrier means,
fig. 7 shows a second embodiment of the apparatus of the invention, seen from the same end as the apparatus in fig. 3,
fig. 8 is a side view of the apparatus in fig. 7,
fig. 9 shows a section of a side frame of the apparatus in figs. 7 and 8,
fig. 10 shows a horizontal cross-section through the side frame of the apparatus in fig. 9,
fig. 11 shows a detail of the cross-section in fig. 10 in another position of a cam disc and with parts omitted,
fig. 12 is a perspective view of part of a profile rail with an angle member slidable thereon to retain a cam disc, etc. according to the second embodiment,
fig. 13 shows a horizontal cross-section through a vertical part of a side frame according to the second embodiment,
fig. 14 shows a vertical section through a corner of a side frame according to the second embodiment, and
fig. 15 shows the same corner as fig. 14, but, for clarity, just shows the slide blocks and eyes on the driving toothed belt.

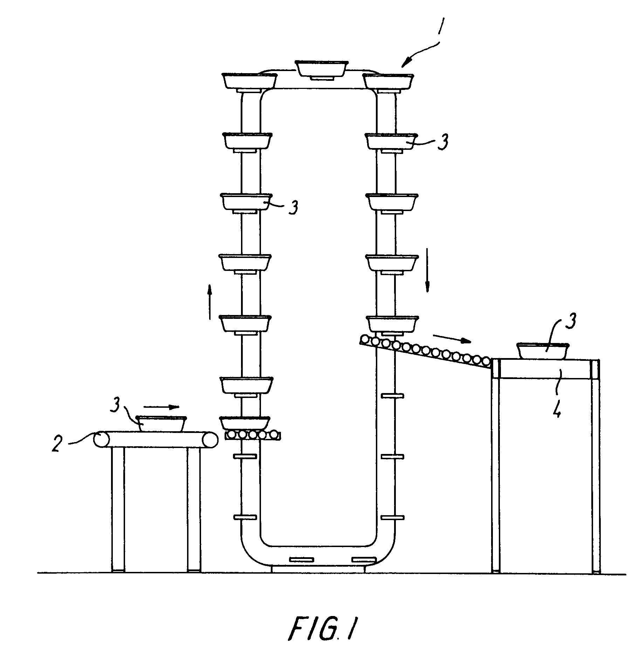

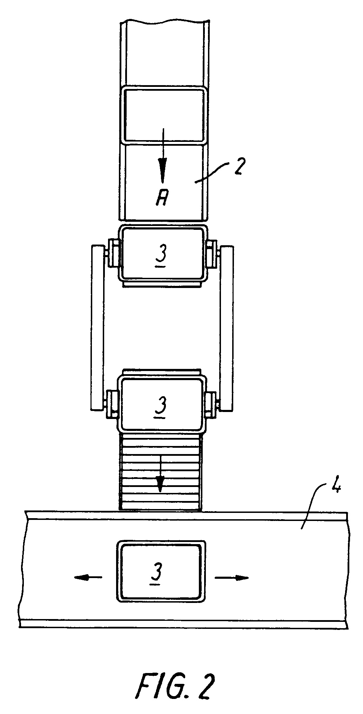

Figs. 1 and 2 show an apparatus 1 according to the invention mounted between the end of a conveyor belt 2, from which boxes 3 can be lifted by means of the apparatus 1 to another conveyor belt 4 optionally disposed at a higher level, which receives the boxes 3 and conveys them further on to one or the other side.

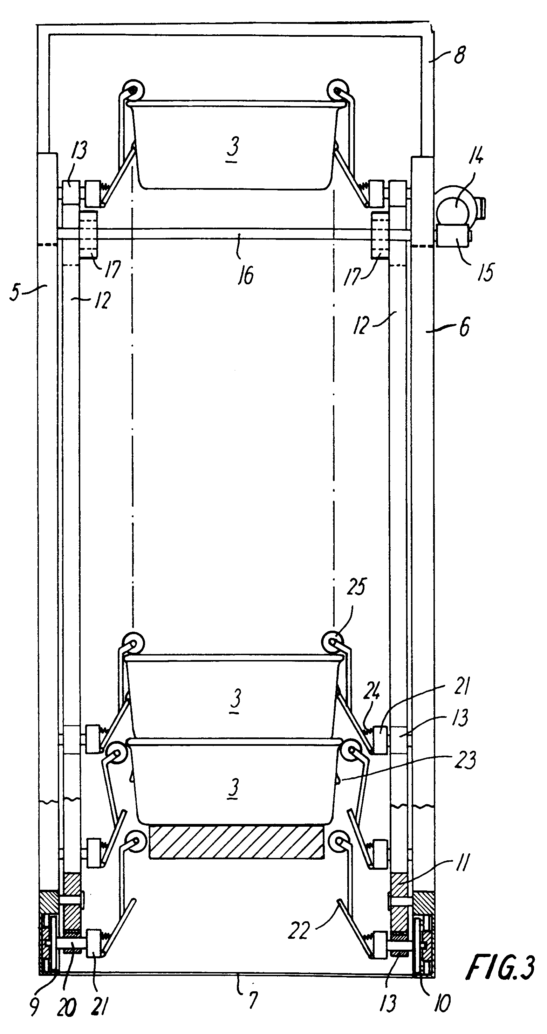

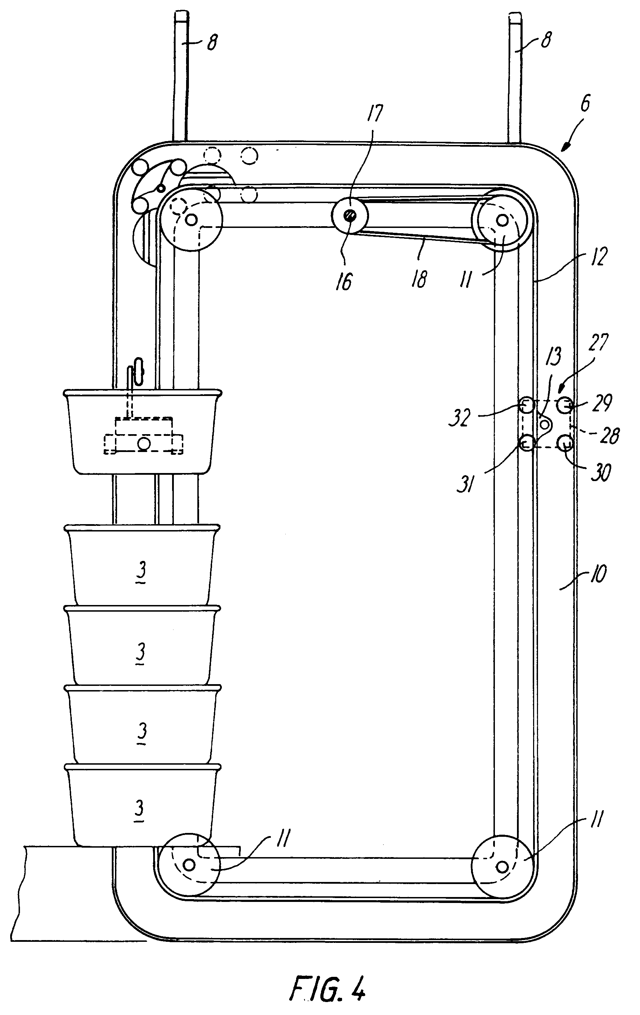

The apparatus of the invention is shown in greater detail in figs. 3 and 4. The apparatus 1 is constructed as a frame consisting of two side frames 5 and 6 which are vertical in the position of use, and which are clamped together by rods 7 downwardly and rods 8 upwardly so that the side frames 5 and 6 are parallel.

Each side frame 5 and 6 has a guide groove 9 and 10, respectively, facing inwardly toward the apparatus, as appears from the section at the bottom of fig. 3. The guide groove 10 in the side frame 6 is also shown in fig. 4.

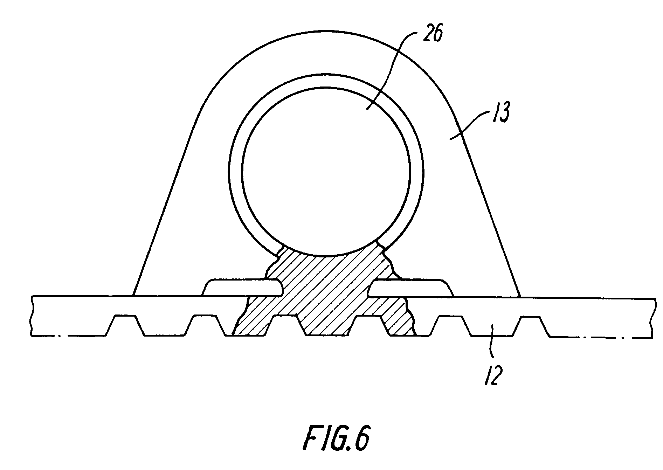

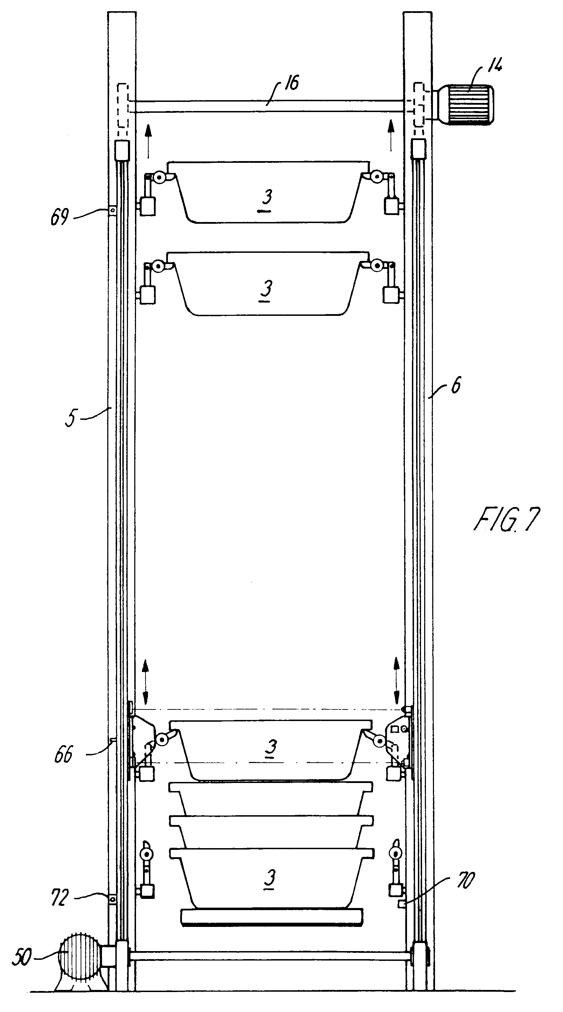

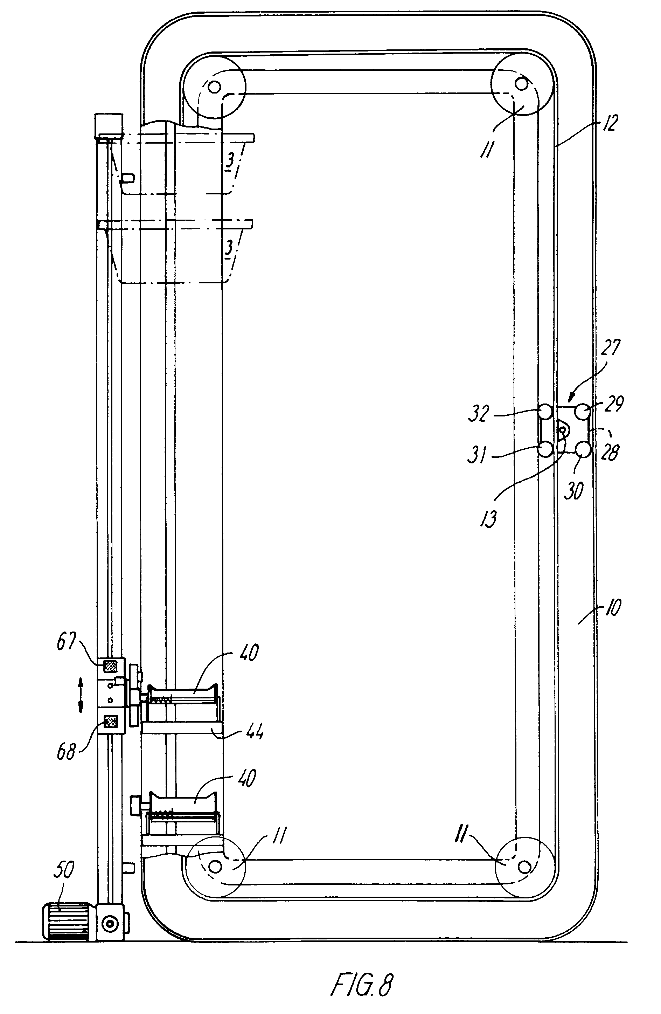

The corners of each side frame 5, 6 accommodate rotatably journalled cylindrical gear wheels 11, which are encircled by a closed toothed belt 12. The toothed belt 12 is preferably moulded so as to be closed without joints. Eyes 13, only one of which is shown in fig. 4, are integrally moulded with the toothed belt 12 at regular intervals. In fig. 6, such an eye 13 is shown on a section of the toothed belt 12 on a larger scale, thereby making it visible how the eye 13 is integrally moulded with the toothed belt 12.

A motor 14, firmly mounted in the apparatus, drives a shaft 16 via a gear wheel 15, said shaft being journalled upwardly in the apparatus 1 between its side frames 5 and 6. A cylindrical gear wheel 17 is secured within the side frame 5 or 6 in question at each end of the shaft; by means of another toothed belt 18 the gear wheel 17 drives a cylindrical gear wheel 19 which is secured on the same shaft as one of the cylindrical gear wheels 11 which are encircled by the toothed belt 12. In this manner the motor 14 drives the toothed belts 12 in both side frames 5 and 6 with the same direction of rotation and with the same peripheral speed, i.e. synchronously.

The mentioned eyes 13 on the toothed belts 12 form bearings for shafts 20 for carrier means 21 having support means 22 which are adapted to engage a projection 23 on the side of a box 3 during their movement toward the underside of the box 3. The support means 22 are urged to engage the box 3 and thus to engage the projection 23 of the box because of the force from a compression spring 24.

A sensor means 25 in the form of a roller registers whether a second box 3 is stacked on top of the box against which a support means 22 is being pressed. In case of such a stacked box, the roller 25 keeps the support means 22 spaced from the box 3 such that the support means 22 is kept clear of the projection 23 of the box 3. The carrier means 21 in question thus passes the box 3 in a stack of boxes, and its support means 22 first engages the uppermost box in the stack. Then the subsequent carrier means lifts the next-to-the-uppermost box, which has become the uppermost box in the meantime.

It is important that during their motion by means of the toothed belts 12 the carrier means 21 are disposed oppositely each other in the two side frames 5 and 6. This is achieved by adjusting them in this position from the beginning, since the synchronous operation of the toothed belts 12 entail that this adjustment is maintained.

It is moreover important that the carrier means 21 maintain the same orientation as shown in the drawing during their movement along the guide grooves 10 in the side frames 5 and 6. To achieve this, the shaft 20 of each carrier means 21 is passed rotatably through a circular opening 26 in the eye 13 and provided, on the end opposite to the carrier means 21, with a guide means 27 which is secured to the shaft 20 and which is so engaged with the guide groove 10 that it cannot rotate with respect to said groove, but can just move purely translatorily during the movement in the guide groove 10.

In the concrete embodiment, the guide means 27 consists of a square plate 28 with a rotatable roller 29, 30, 31, 32 journalled on a stop axle in each corner. When the guide means 27 is moved in the guide groove 10, the rollers 29, 32 engage the edges of the guide groove 10 as long as the guide means move along rectilinear sections. At the corners, on the other hand, two diametrically opposed rollers disengage the edges of the guide groove 10.

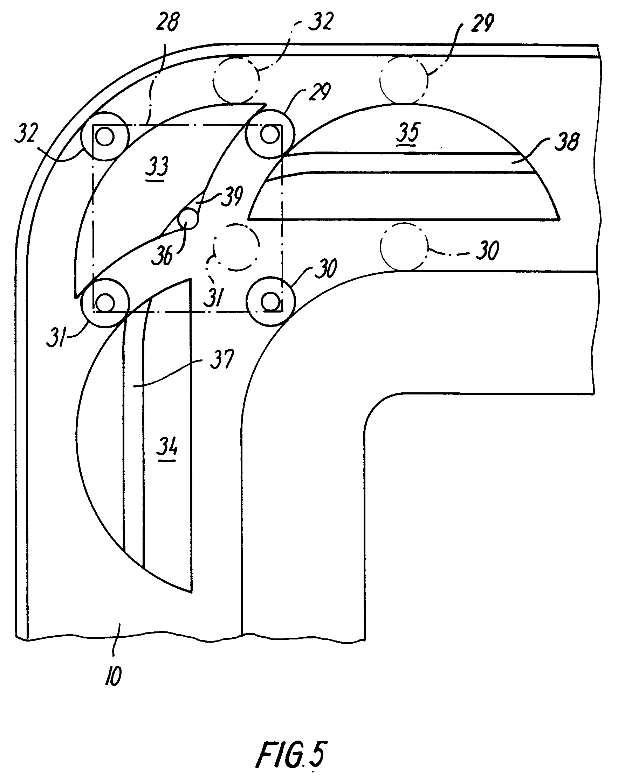

When passing e.g. the top left corner in fig. 4, the rollers 29, 31 disengage the edges of the guide groove 10. To ensure a stable smooth movement of the guide means 27 when passing these corners, some crescent-shaped or circular segment-shaped elevations 33 and 34, 35 are provided in the bottom of the guide groove 10, as shown in fig. 5. These elevations entail that at least three of the four rollers 27-31 constantly touch the edges of the guide groove during passage of the corner. To additionally stabilize the passage of the corners, the plate 28 has a guide pin 36 in the center, and the elevations 34 and 35 have respective tracks 37 and 38, and the elevation 33 has a lower corner 39, so that the guide pin 36 follows the path shown in fig. 5 through the track 38, past the lower corner 39 and through the track 37.

For clarity, the elevations 33, 34 and 35, etc. are just shown at one of the corners, but are provided at all corners of course.

For clarity, just few of the carrier means 21 are shown on the drawing.

The apparatus 1 can now operate both as a stacker of boxes 3 or as a destacker of boxes 3, which are then carried futher on on a conveyor belt. This selection is quite simply decided by the direction of rotation of the motor 14. If, as shown in fig. 3, the carrier means 21 move upwardly toward a stack of boxes 3, i.e. with the sensor means foremost, they bring along the uppermost box in the stack and deliver it on the opposite side of the apparatus on a base, e.g. a conveyor belt, whereby the carrier means clear the box and continue their movement along the guide groove 10.

If, on the other hand, as shown in figs. 1 and 2, the boxes 3 are fed into the apparatus 1 at the conveyor belt 2, in suitable synchronism with the upward passage of the carrier means 21, the boxes are gripped by the carrier means 21 and moved to the other side of the apparatus 1 to be discharged there to the higher conveyor belt 4 as shown in figs. 1 and 2, or to be optionally stacked on top of each other on a not shown trolley on the floor.

The cylindrical gear wheels mentioned in the description can of course also be helical gear wheels if the toothed belts have a corresponding toothed shape. Also other equivalent drive means may be used, e.g. gear wheels and chains, it being just necessary to ensure the synchronous movement of the carrier means 21.

It will also be possible that just the guide groove at one side frame is so engaged with the guide means of the carrier means for all the carrier means to maintain the same orientation. This just necessitates that there is a (not shown) physical connection, optionally a rod connection, between the pairs of mutually oppositely positioned carrier means on the two side frames.

As mentioned, the toothed belts may be produced as a closed loop, i.e. without ends to be assembled. Furthermore, the eyes 13 may be moulded integrally on these toothed belts. These features add considerably to the tensile strength and wear resistance of the toothed belts.

It has been stated that gear wheels 11 are provided in each of the corners of the side frames 5, 6. However, it is sufficient that just one gear wheel is provided in each side frame to pull the corresponding toothed belt. The other gear wheels may then be replaced by guide rollers for the toothed belt 12.

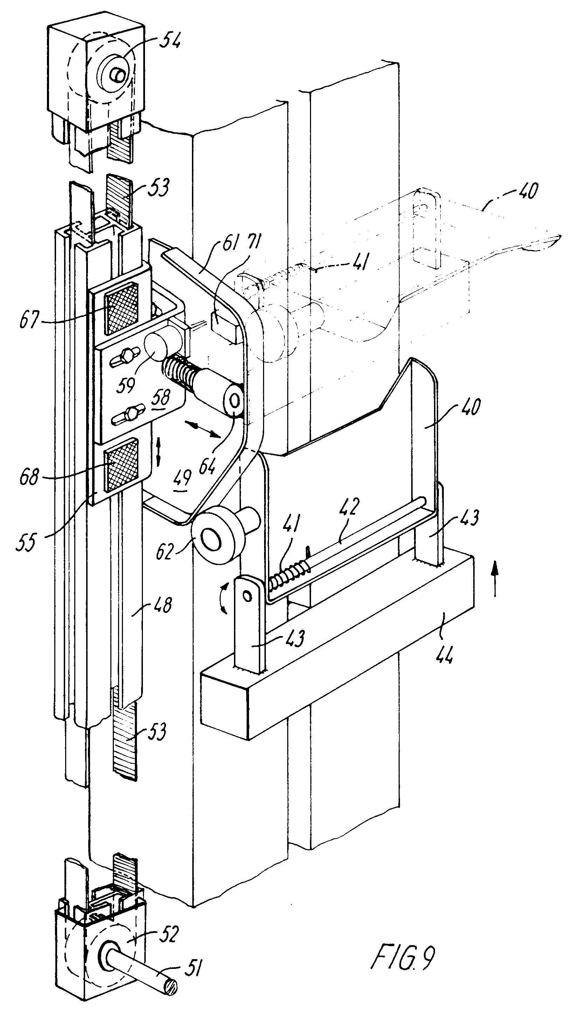

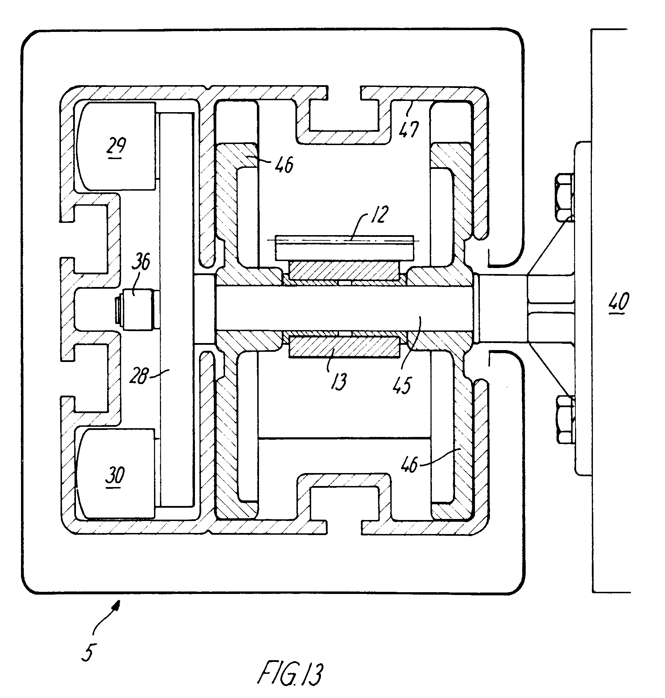

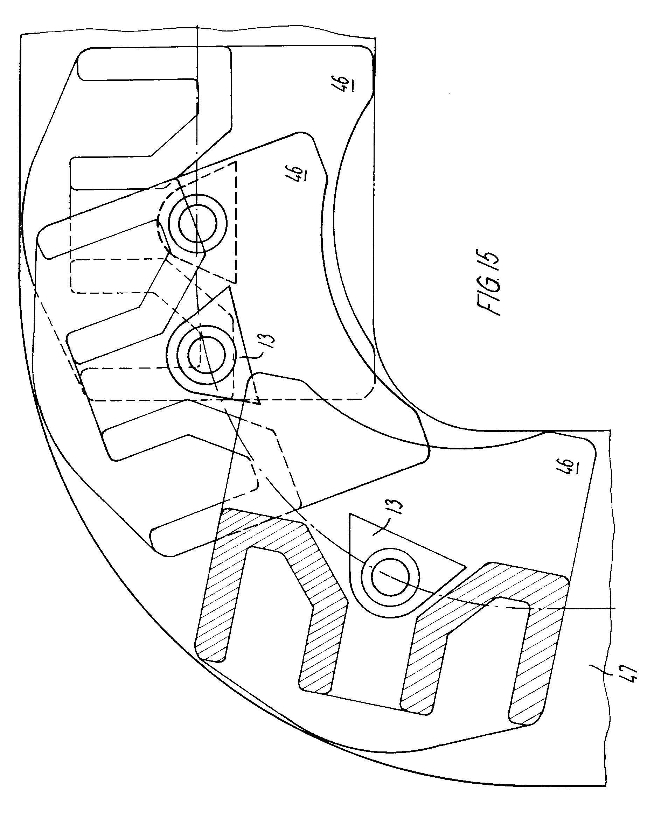

The second embodiment shown in figs. 7-15 will now be described in greater detail; the parts corresponding to parts in figs. 1-6 have the same reference numerals and will not be described in greater detail. Figs. 7, 8 and in particular fig. 9 show a second embodiment of two support means 40, the lower one shown in solid line in a vertical position in which it is kept by a spring 41, and the upper one shown in dotted line in a horizontal position which it is caused to assume against the force of the spring 41.

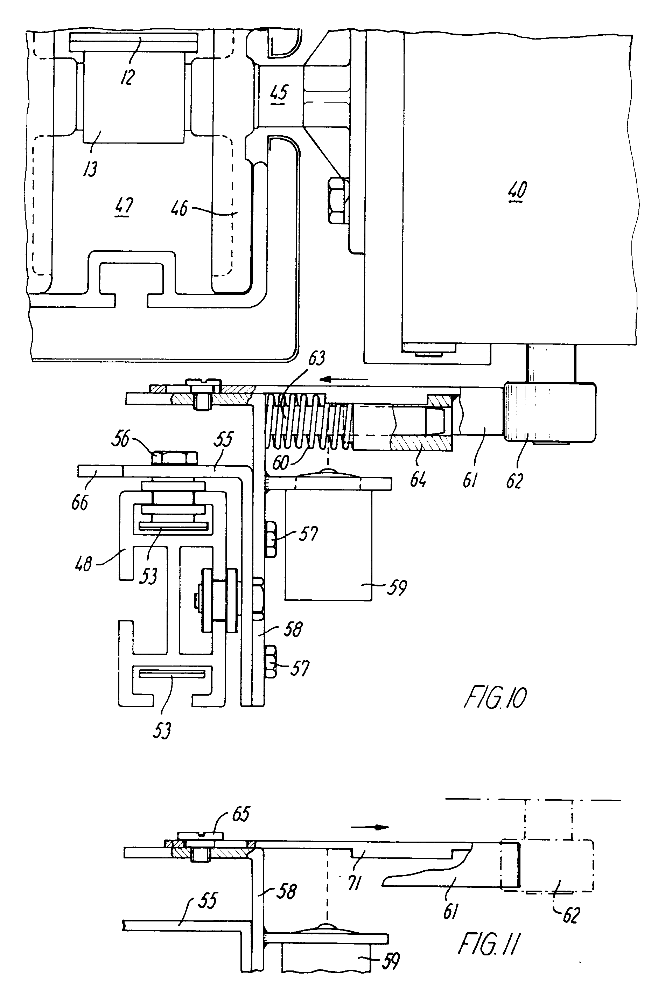

The support means 40 is thus pivotably journalled about a shaft 42, which is secured between two flat bars 43 on a rod 44 secured to a shaft 45 (fig. 10) which is journalled in an eye 13 on the toothed belt 12.

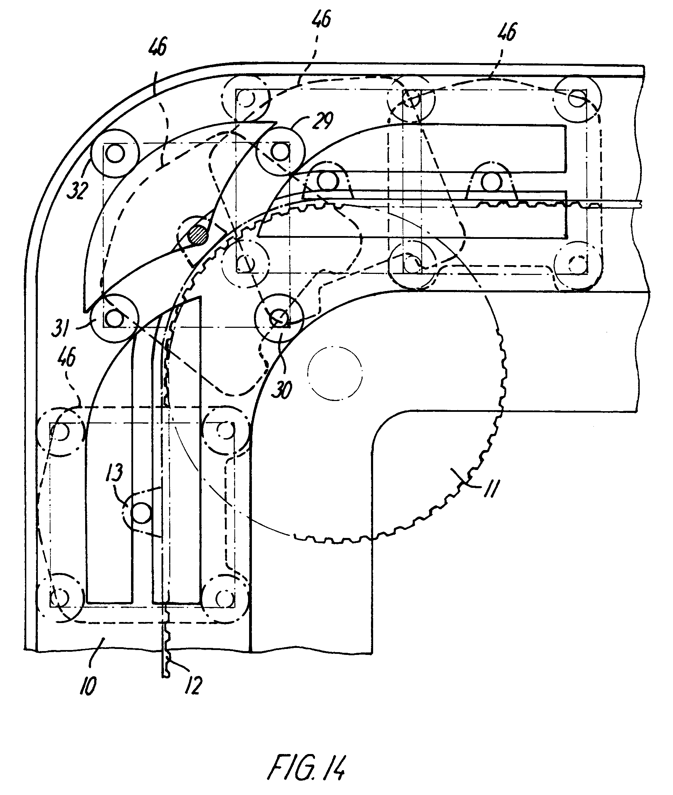

The mounting of the shaft 45 itself through an opening in a side frame 5 is shown most clearly in fig. 13.

On each side of the eye 13 of the toothed belt 12 the shaft 45 has a slide block 46 which slides in a track 47 in the side frame 5 during the movement round the frame.

The two slide blocks 47 are bolted together and journalled on the shaft 45 and thereby serve to impart additional stability to the movement of the support means 40 in the frame. Thus, the slide blocks 47 absorb a deflecting moment in the shaft 45 and carry the weight of the support means 40 in the horizontal parts of the frame.

A vertical profile rail 48 is provided at each side of the apparatus opposite each of the side frams 5 and 6, said profile rail having a motion mechanism for an activation means 49, which can be moved up or down in synchronism with the activation means 49 in the other side frame. The motion mechanism consists of a motor 50 (fig. 8) which, via a shaft 51, drives a drive wheel 52 on which a toothed belt 53 is laid, said toothed belt 53 being run around a return pulley 54 at the other, top end of the profile rail 48.

An angle profile 55 is secured on the toothed belt 53 by means of bolts 56 which are passed through a vertical slot in the profile rail. Other bolts 57 through another slot serve guide purposes.

The actual activation means 49 consists of a part 58 which is bolted on the angle profile 55 and carries an inductive sensor 59, and by a cam disc 61 thereon, said cam disc 61 being moveable against the force from a spring 60 and capable of engaging a roller 62 rotatable on a support means 40.

The movement of the cam disc 61 on the part 58 is controlled by a pin 63 on the part 58 in engagement with a sleeve 64 on the cam disc 61 and by a screw 65 inserted into the part 58 and extending through an oblong slot in the cam disc 61.

The angle profile 55 has a projecting boss 66 whose function will be mentioned later.

As shown in fig. 9, two sensors 67 and 68, respectively, positioned above each other, are secured on the angle profile 55 of each activation means to cooperate with two correspondingly positioned reflectors on the activation means at the other side frame.

The mode of operation of the apparatus in figs. 7-15 is as follows:
Both of the activation means 49 are present in top position (and are always present at the same height since they are controlled synchronously), and the boss 66 has activated a sensor 69 which is shown in fig. 7.

A stack of boxes is fed into the apparatus until a photo-cell 70 in fig. 7 signals ready and the stack is in position.

A start signal is applied for the downward movement of the activation means 49 at a velocity of approx. 0.5 m/s, until the sensor 68 registers the upper frame of the upper box, which stops the downward movement of the activation means. The apparatus has now recorded the heigth of the stack, i.e. the position of the upper box frame. The reason is that not all stacks have the same height, which depends upon the type of box and the number of boxes in a stack.

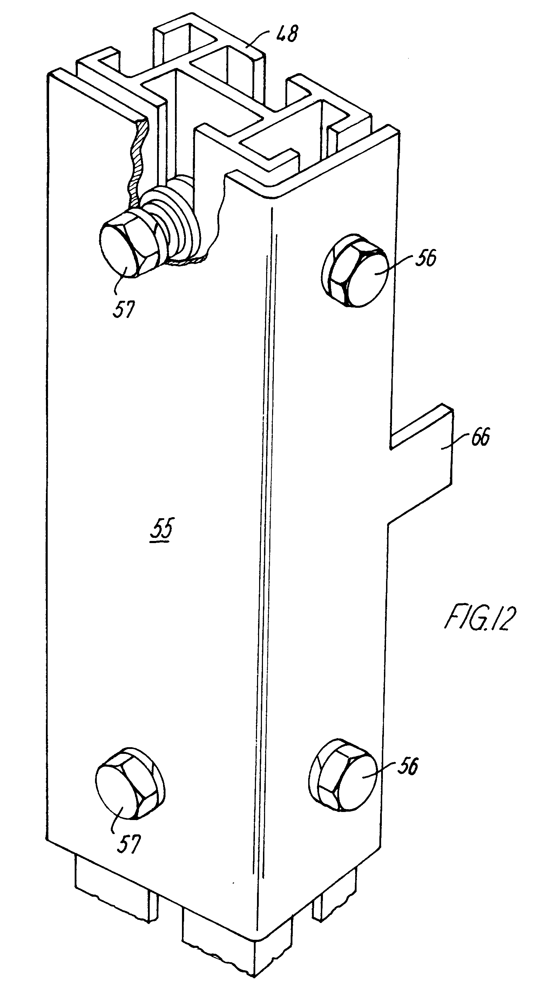

The activation means 49 wait in this position until a pair of support means 40 pass the activation means 49, causing the roller 62 on each support means 40 to engage a cam disc 61 which forcibly closes the support means 40, i.e. positions it in a horizontal position, over the uppermost box. This entails that the cam disc 61 of the activation means 49, loaded by the spring 60, is pressed inwardly and moves a metal tab 71 (fig. 11) into the field of the inductive sensor 59 to indicate that a pair of support means have just passed a pair of activation means 49. The signal is used as a start signal for restarting the activation means 49 in the downward direction.

The activation means 49 are stopped again when the uppermost box frame is registered by the sensor 67, fig. 8.

When the next pair of support means 40 pass the stationary activation means 49, the support means 40 are forcibly closed below the gripper faces of the uppermost box 3, and only then does the apparatus remove the uppermost box 3 from the stack. The weight of the box keeps the support means 40 closed, and the box is automatically centered at the same time.

During closing of the support means 40, the activation means 49 receive a start signal for movement downwards again from the sensor 59, following which the activation means 49 again get into position for the next box in the stack. This continues until there are no more boxes in the stack.

When the last box in the stack has been removed, the photocell 70 will be activated as a stop signal to activation means and as a ready signal for feeding a new stack into the apparatus, respectively.

A sensor 72 (fig. 7) serves as an additional lower stop and is activated in an emergency by the boss 66 on the angle profile 55.

The activation means 49 remain in the bottom position until a pair of grippers pass, and the combination "empty stack" and start signal from the sensor 59 causes the activation means 49 to move to top position (the motor 50 reverses) at the same velocity as the support means 40 approx. 0.25 m/s. Collisions between the activation means 49 and the support means 40 are hereby avoided.

The activation means 49 stop in the top position upon activation of the sensor 69 in fig. 7 by means of the boss 66.

## Claims

1. An apparatus (1) for stacking boxes (3) arriving from a conveyor belt and for destacking boxes (3) which are conveyed to a conveyor belt and for transferring boxes (3) from a conveyor belt (2) to another conveyor belt (4) optionally disposed at a higher level, said apparatus comprising a frame with a pair of vertical parallel and interconnected rectangular side frames (5, 6), both of which have a peripherally annular guide groove (9, 10) facing the other side frame,
rotatably journalled wheels (11), in particular gear wheels, provided in the corners of each side frame, said wheels being encircled by a closed belt (12), in particular a toothed belt,
a drive motor (14) driving at least one gear wheel (15) in each side frame (5, 6) such that the toothed belts (12) are driven in synchronism,
carrier means (40) attached to each toothed belt (12) at suitable intervals so that a carrier means (40) on one toothed belt (12) is positioned opposite to a carrier means (40) on the other toothed belt (12),
each carrier means (40) having guide means (27) engaged with the guide groove (10) on the side frame (5, 6) in question such that the carrier means (40) maintain the same orientation when they are moved along the guide groove in response to the drive motor operation of the toothed belts, and
each carrier means (40) having a support means (40) loaded by a spring (41), each said support means (40) being kept free from a stack of boxes (3) by the force from the spring, but adapted to engage a projection (23) on the side of a box in the stack by the action of an activation means (49) which counteracts the force of the spring (41), **characterized** in that one activation means (49) is provided in association with each rectangular side frame (5, 6), the two activation means (49) being synchronously movable in an upward or downward direction and driven independently of the carrier means and guided in their respective vertical profile rails (48) and provided with sensors (67, 68) which, during the downward movement of the activation means (49) from a top position opposite the support means (40), register the box uppermost at any time in the stack and stop the activation means (49) opposite said box, so that the next upward moving support means (40) are caused to engage the box (3).

2. An apparatus according to claim 1, **characterized** in that each activation means (49) is attached to another toothed belt (53) extending around a drive wheel (52) at one end of the profile rail (48) and a return pulley (54) at the other end of the profile rail.

3. An apparatus according to claims 1-2, **characterized** in that each activation means (49) is provided as a cam disc (61) capable of engaging a roller (62) rotatable on each support means (40).

4. An apparatus according to claims 1-3, **characterized** in that each activation means (49) at one side frame has two sensors (67, 68) disposed above each other to cooperate with two correspondingly positioned reflectors on the activation means (49) at the other side frame.

5. An apparatus according to claims 1-4, **characterized** in that the cam disc (61) of each activation means (49) is displaced laterally against the force of a spring (60) upon the engagement with a roller (62) on a carrier means (40), and that an inductive sensor (59) registers this displacement.

6. An apparatus according to claims 1-5, **characterized** in that at least one activation means (40) has a boss (66) to affect a sensor (69) upwardly or downwardly in the frame.

7. An apparatus according to claims 1-6, **characterized** in that each carrier means (40) is secured to one end of a shaft (45), whose other end is secured to the guide means (27), the shaft (45) carrying between the ends a set of slide blocks (46) which are bolted together and which slide in tracks (47) in the side frames (5, 6) during the movement round the frame.

8. An apparatus according to claim 7, **characterized** in that each guide means (27) consists of a square plate (28) with a rotatable roller (29-32) in each corner to engage the edges of the guide groove (10).

9. An apparatus according to claims 7 and 8, **characterized** in that the bottom of the guide groove (10) has crescent-shaped or circular segment-shaped elevations (33-35) in the corners of the side frame (5, 6).

10. An apparatus according to claims 8 and 9, **characterized** in that the plate (28) has a guide pin (36) in the center, and that the elevations (34, 35, 33) have respective tracks (37, 38, 39).

## Patentansprüche

1. Anlage (1) zum Stapeln von von einem Fließband ankommenden Behältern (3) und zum Abstapeln von Behältern (3), die zu einem Fließband weggeführt werden, sowie zur Überführung von Behältern (3) von einem Fließband (2) zu einem anderen Fließband (4), das gegebenenfalls auch auf einem höheren Niveau positioniert ist, wobei die Anlage einem Rahmen mit einem Paar von vertikalen, parallel zueinander und miteinander verbundenen, rechteckigen Seitenrahmen (5, 6) hat, von denen beide eine ringförmige Führungsnut (9, 10) an der Außenseite bzw. am Rand besitzen, die jeweils auf den gegenüberliegenden Seitenrahmen zuweist; und
drehbar gelagerte Rollen (11), insbesondere Zahnräder, welche in den Ecken eines jeden Seitenrahmens vorhanden sind und von einem geschlossenen bzw. endlosen Riemen (12), insbesondere einem Zahnriemen, umfaßt werden,
einen Antriebsmotor (14), der zumindest ein Zahnrad (15) in jedem Seitenrahmen (5, 6) in der Weise antreibt, daß die Zahnriemen (12) synchron angetrieben werden, sowie
Trage- bzw. Mitnehmereinrichtungen (40) aufweist, die in geeigneten Abständen an jedem Zahnriemen (12) so befestigt sind, daß eine der Mitnehmereinrichtungen (40) an einem Zahnriemen (12) gegenüberliegend zur anderen Mitnehmereinrichtung am anderen Zahnriemen (40) positioniert ist, wobei
jede Mitnehmereinrichtung (40) eine Führungseinrichtung (27) hat, die mit der Führungsnut (10) am betreffenden Seitenrahmen (5, 6) in einer Weise in Funktionseingriff steht, daß die Mitnehmereinrichtungen (40) ihre gleichbleibende Orientierung beibehalten, während sie im Ansprechen auf die Betätigung des Antriebsmotors mittels der Zahnriemen entlang der Führungsnut bewegt werden, und wobei
jede Mitnehmereinrichtung (40) eine Stützeinrichtung (40) hat, welche durch eine Feder (41) belastet ist und die jeweils durch die Kraft der Feder von einem Behälterstapel (3) ferngehalten wird, jedoch dazu ausgelegt ist durch die Wirkung einer Aktivierungseinrichtung (49), welche der Kraft der Feder entgegenwirkt mit einem Vorsprung (23) an der Seite eines Behälters im Stapel in Eingriff zu treten; dadurch gekennzeichnet, daß eine Aktivierungseinrichtung (49) in Verbindung mit jedem der rechteckigen Seitenrahmen (5, 6) vorgesehen ist, wobei die beiden Aktivierungseinrichtungen (49) synchron in Aufwärts- oder Abwärtsrichtung beweglich sind, unabhängig von den Mitnehmereinrichtungen angetrieben und in ihren betreffenden vertikalen Profilschienen (48) geführt sind, sowie mit Sensoren (67, 68) ausgestattet sind, welche während der Abwärtsbewegung der Aktivierungseinrichtungen (49) von einer obersten Stellung gegenüber den Stützeinrichtungen (40) jederzeit den jeweils obersten Behälter im Stapel registrieren und die Aktivierungseinrichtungen (49) in Gegenüberlage zu diesem Behälter anhält, so daß die nächste sich nach oben bewegende Stützeinrichtung (40) dazu gebracht wird mit dem Behälter (3) in Eingriff zu gelangen.

2. Anlage nach Anspruch 1, dadurch gekennzeichnet, daß jede Aktivierungseinrichtung (49) an einem weiteren bzw. anderen Zahnriemen (53) befestigt ist, der um eine Antriebsrolle (52) an einem Ende der Profilschiene (48) und einem Umkehrritzel (54) am anderen Ende der Profilschiene herumgeführt wird.

3. Anlage nach Anpruch 1 oder 2, dadurch gekennzeichnet, daß jede Aktivierungseinrichtung (49) mit einem Kurvenkörper bzw. einer Kurvenscheibe (61) versehen ist, die in der Lage ist, mit einer betreffenden Rolle (62), die an jeder Stützeinrichtung (40) drehbar gelagert ist, in Funktionskontakt zu gelangen.

4. Anlage nach den Ansprüchen 1 bis 3, dadurch gekennzeichnet, daß jede Aktivierungseinrichtung (49) an einem Seitenrahmen zwei Sensoren (67, 68) hat, die übereinander angeordnet sind und mit zwei entsprechend positionierten Reflektoren auf der Aktivierungseinrichtung (49) am anderen Seitenrahmen zusammenwirken.

5. Anlage nach den Ansprüchen 1 bis 4, dadurch gekennzeichnet, daß die Kurvenscheibe (61) einer jeden Aktivierungseinrichtung (49) bei Funktionskontakt bzw. Funktionseingriff mit einer Rolle (62) auf einer Mitnehmereinrichtung (40), entgegen der Kraft einer Feder (60) seitlich verschoben wird und daß ein induktiver Sensor (59) diese Verschiebung registriert.

6. Anlage nach den Ansprüchen 1 bis 5, dadurch gekennzeichnet, daß zumindest eine Aktivierungseinrichtung (49) einen Vorsprung (66) besitzt, um bei Aufwärts- oder Abwärtsbewegung einen Sensor (69) im Rahmen zu beeinflussen.

7. Anlage nach den Ansprüchen 1 bis 6, dadurch gekennzeichnet, daß jede Mitnehmereinrichtung (40) an einem Ende einer Welle (45) befestigt ist, dessen anderes Ende an der Führungseinrichtung (27) befestigt ist, wobei die Welle (45) zwischen ihren Enden einen Satz bzw. eine Baugruppe von Gleitblöcken bzw. -schlitten (46) trägt, welche zusammengeschraubt sind und während der Bewegung um den Rahmen herum in Schienen (47) in den Seitenrahmen (5, 6) gleiten.

8. Anlage nach Anspruch 7, dadurch gekennzeichnet, daß jede Führungseinrichtung (27) aus einer Rechteckplatte (28) mit einer drehbaren Rolle (29-32) in jeder Ecke besteht, um damit mit den Rändern bzw. mit der Einfassung der Führungsnut (10) im Eingriff zu gelangen.

9. Anlage nach den Ansprüchen 7 und 8, dadurch gekennzeichnet, daß die Sohle der Führungsnut (10) halbmond- oder kreisabschnittförmige Erhebungen (33-35) in den Ecken der Seitenrahmen (5, 6) besitzt.

10. Anlage nach den Ansprüchen 8 und 9, dadurch gekennzeichnet, daß die Rechteckplatte (28) in ihrem Zentrum einen Führungsstift (36) besitzt, und daß die Erhebungen (33-35) entsprechende Führungsbahnen (37-39) haben.

## Revendications

1. Appareil (1) d'empilage de boîtes (3) arrivant d'un ruban transporteur et de prélèvement sur la pile de boîtes (3) qui sont transportées vers un ruban transporteur et de transfert de boîtes (3) d'un ruban transporteur (2) sur un autre ruban transporteur (4) disposé facultativement à un niveau plus élevé, ledit appareil comprenant un bâti comportant deux châssis latéraux rectangulaires, verticaux et parallèles (5, 6), reliés l'un à l'autre, tous deux comportant une gorge annulaire périphérique de guidage (9, 10) faisant face à l'autre châssis latéral,
des roues montées rotatives (11), en particulier des roues dentées placées dans les angles de chaque châssis latéral, lesdites roues étant encerclées d'une courroie sans fin (12), en particulier d'une courroie crantée,
un moteur de commande (14) entraînant au moins une roue dentée (15) placée dans chaque châssis latéral (5, 6) de manière que les courroies crantées (12) soient entraînées en synchronisme,
des moyens transporteurs (40) fixés à chaque courroie crantée (12) à des intervalles convenables de manière qu'un moyen transporteur (40) placé sur une courroie crantée (12) soit positionné du côté opposé à celui d'un moyen transporteur (40) placé sur l'autre courroie crantée (12),
chaque moyen transporteur (40) comprenant un moyen de guidage (27) en prise avec la gorge de guidage (10) située sur le châssis latéral correspondant (5, 6), de façon que les moyens transporteurs (40) conservent la même orientation lorsqu'ils sont déplacés le long de la gorge de guidage en réponse au fonctionnement du moteur d'entraînement des courroies crantées et
chaque moyen transporteur (40) comportant un moyen de support (40) soumis à la force d'un ressort (41), chaque moyen de support (40) étant maintenu à distance d'une pile de boîtes (3) par la force du ressort, mais étant conçu pour se placer contre une protubérance (23) située sur le côté d'une boîte de la pile sous l'effet de l'action d'un moyen d'activation (49) qui contrecarre la force du ressort (41), caractérisé en ce qu'un moyen d'activation (49) est prévu en association avec chaque châssis latéral rectangulaire (5, 6), les deux moyens d'activation (49) étant déplaçables en synchronisme vers le haut ou vers le bas et étant commandés indépendamment des moyens transporteurs en étant guidés dans leurs barres profilées verticales respectives (48) et étant de plus équipés de détecteurs (67, 68) qui, pendant le mouvement descendant du moyen d'activation (49) à partir d'une position supérieure située en face du moyen de support (40), détecte la boîte supérieure en un moment quelconque dans la pile et arrête le moyen d'activation (49) en face de ladite boîte, de façon que le moyen suivant de support (40) se déplaçant vers le haut soit amené à prendre en charge la boîte (3).

2. Appareil selon la revendication 1, caractérisé en ce que chaque moyen d'activation (49) est fixé à une autre courroie crantée (53) disposée autour d'une roue d'entraînement (52) située à une extrémité de la barre profilée (48) et d'une poulie de renvoi (54) placée à l'autre extrémité de la barre profilée.

3. Appareil selon l'une des revendications 1 et 2, caractérisé en ce que chaque moyen d'activation (49) est équipé d'un disque de came (61) capable de se placer contre un galet (62) qui est rotatif sur chaque moyen de support (40).

4. Appareil selon l'une quelconque des revendications 1 à 3, caractérisé en ce que chaque moyen d'activation (49) qui est situé sur un châssis latéral comprend deux détecteurs (67, 68) disposés l'un au-dessus de l'autre de manière à coopérer avec deux réflecteurs positionnés en correspondance sur le moyen d'activation (49) placé sur l'autre châssis latéral.

5. Appareil selon l'une quelconque des revendications 1 à 4, caractérisé en ce que le disque de came (61) de chaque moyen d'activation (49) subit un décalage latéral contre la force d'un ressort (60) lorsqu'il entre en prise avec un galet (62) placé sur un moyen transporteur (40) et en ce qu'un détecteur à induction (59) détecte ce déplacement.

6. Appareil selon l'une quelconque des revendications 1 à 5, caractérisé en ce qu'au moins un moyen d'activation (40) comprend un bossage (66) destiné à agir vers le haut ou vers le bas sur un détecteur (69) situé dans le bâti.

7. Appareil selon l'une quelconque des revendications 1 à 6, caractérisé en ce que chaque moyen transporteur (40) est fixé à une extrémité d'un arbre (45) dont l'autre extrémité est fixée au moyen de guidage (27), l'arbre (45) supportant entre les extrémités un groupe de glissières (46) qui sont boulonnées les unes sur les autres et qui coulissent dans des pistes (47) situées dans les châssis latéraux (5, 6) pendant le mouvement autour du bâti.

8. Appareil selon la revendication 7, caractérisé en ce que chaque moyen de guidage (27) consiste en une plaque carrée (28) équipée à chaque angle d'un galet rotatif (29-32) destiné à se placer contre les bords de la gorge de guidage (10).

9. Appareil selon les revendications 7 et 8, caractérisé en ce que le fond de la gorge de guidage (10) comporte des élévations (33-35) en forme de croissants ou en forme de segments circulaires aux angles du châssis latéral (5, 6).

10. Appareil selon les revendications 8 et 9, caractérisé en ce que la plaque (28) comporte au centre une broche de guidage (36) et en ce que les protubérances (34, 35, 33) comportent des pistes respectives (37, 38, 39).
